# EUROPÄISCHE PATENTSCHRIFT

(11) **EP 2 674 331 B1**
(45) Veröffentlichungstag und Bekanntmachung des Hinweises auf die Patenterteilung: **11.03.2015**
(21) Anmeldenummer: 13163495.8
(22) Anmeldetag: 12.04.2013
(51) Int. Cl.: B60R 16/023, B60R 11/04, B60R 11/02, G01D 11/30, B60R 11/00

(54) **Aufnahmevorrichtung**
Holding device
Dispositif de réception

(30) Priorität: 13.06.2012 DE 102012011596
(43) Veröffentlichungstag der Anmeldung: 18.12.2013
(73) Patentinhaber: Decoma (Germany) GmbH, 66280 Sulzbach / Saar (DE)
(72) Erfinder: Huttenlocher, Marc, 72622 Nürtingen (DE)
(74) Vertreter: Rausch, Gabriele

(56) Entgegenhaltungen:
- EP-A2- 0 758 834
- DE-A1-102006 061 308
- DE-A1-102009 011 614
- US-A1- 2010 052 353

## Beschreibung

Die Erfindung betrifft eine Aufnahmevorrichtung für elektrische Komponenten in einem Kraftfahrzeug nach der Art von Anspruch 1.

In modernen Kraftfahrzeugen werden zur Erfassung der Verkehrssituation elektronische Kameras verwendet, welche in der Front- und oder Heckscheibe bzw. im Bereich der Außenkarosserie angeordnet sind. Diese Kamerasysteme bestehen aus eine Optik sowie einer als Flächenchip ausgebildeten Bildaufnahmevorrichtung mit einer nachgeschalteten Elektronik, so dass die Bildsignale über eine entsprechende Verkabelung - meist über ein Koax-Kabel einer Auswerteelektronik zugeleitet werden kann.

Die beschriebenen und im KFZ-Bereich eigesetzten Kamerasysteme sind kompakt in einem Gehäuse ausgeführt, d.h. Optik, Chip sowie die direkt dem Chip zugeordnete Elektronik sind in einem einstückigen Gehäuse zusammengefasst. Diese kompakte Einheit wird dann in eine entsprechende Aufnahme am Kraftfahrzeug eingesetzt. Ein bekannter Anwendungsfall ist eine Surround-Kamera, mittels der die Außenumgebung des Fahrzeuges - insbesondere der Heckbereich - aufgenommen und auf einem Bildschirm im Innenbereich wiedergegeben wird.

Bisherige Surround-Kameras sind meist in einem Kunststoffgehäuse untergebracht. Als fahrzeugseitige Aufnahme dient eine Öffnung, in welche das Gehäuse der Kamera eingesteckt und darin verrastet wird. Die Aufnahme bzw. das Gehäuse weisen zur Fixierung der Kamera entsprechende Rastelemente, Rastzungen, sowie Fixier- und Einführrippen auf.

Metallgehäuse von Kamerasystemen mit aufwändigerer Optik bzw. größeren Bild-Chips können in diesen bekannten Aufnahmeanordnungen nicht bzw. nicht ohne zusätzlichen Aufwand fixiert werden.

In der DE 102009 011614 A1 wird ein Verschlusselement bestehend aus zwei Drahtbügeln beschreiben. Der Federbügel 1 ist gelenkig über eine Federaufnahme mit einer Aufnahme für eine elektronische Baugruppe verbunden. Die Federaufnahme 2 ist nicht gelenkig mit dem Aufnahmerahmen 6 für den Sensor verbunden. Die Anbindung des Federbügels 1 erfolgt am Gehäuse des Sensors selbst nicht direkt an der Aufnahme. Die Verriegelung der in der DE 102009011614 A1 dargestellten Lösung erfolgt über zwei Federbauteile und über direkte Verrastung mit dem Sensor, der gehalten werden soll. Damit wird die Flexibilität der Aufnahme eingeschränkt, da die Bauteile ein Gehäuse aufweisen müssen, das die Verrastung zulässt.

Das Dokument DE102006061308 A1 offenbart eine Aufnahmevorrichtung aus einen Metallstanzteil, zur Aufnahme und Fixierung eines Gehäuses für eine Sensorik oder eine Elektronik oder eine optischer Sensor in und an einem Kraftfahrzeug, bestehend aus einem als Rahmen ausgebildeten, einen Innenraum umgebenden Aufnahme, in welchen das Gehäuse festgehalten wird. Weiter einem gelenkig mit Rahmen der Aufnahme verbundenen schwenkbaren Federbügel mit zugeordneten Fixierung welche den Federbügel in der geschlossenen Position hält.

Als weiterer Aspekt des Gehäuses sollte zusätzlich zur Verrastung auch der ein minimaler Schutz der Öffnung für die Sensoren vorhanden sein. Wenn die Surround-Kamera im Frontbereich des Fahrzeugs eingesetzt wird, ist sie Steinschlägen ausgesetzt. Daher ist eine Abdeckung oder Abschirmung sicherlich nützlich.

Die Aufgabe der vorliegenden Erfindung besteht darin, eine Aufnahmevorrichtung für eine Sensorik, eine Elektronik, eine Antriebseinheit oder eine Kamera in gegenüber den bekannten Ausführungen verbesserter Ausführung zu schaffen.

Diese Aufgabe wird gelöst durch die Merkmale von Anspruch 1. Weiterbildungen ergeben sich aus den Unteransprüchen.

Gemäß der Erfindung ist eine Aufnahmevorrichtung vorgesehen, bestehend aus einem als Rahmen ausgebildeten, einen Innenraum umgebenden Aufnahme, in welchen ein Gehäuse, bspw. ein Gehäuse einer Kamera einschiebbar ist, einem gelenkig mit Rahmen der Aufnahme verbundenen Verschlusselement, welches von einer die Aufnahme freigebenden Stellung in eine die Aufnahme schließenden Stellung verschwenkbar ist sowie einem dem Verschlusselement zugeordneten Fixierung, welche das Verschlusselement in der geschlossenen Position hält.

Bei dem Verschlusselement handelt es sich bevorzugt um einen Federbügel, der im Wesentlichen U-förmig bzw. W-förmig gestaltet ist und über je eine Abwinkelung an den Enden der U-Schenkel in einer Öffnung des Aufnahmerahmens gelagert ist. Der Federbügel kann so nach Einschieben des Kameragehäuses von der Offenposition in die Schließposition verschwenkt werden, in der das Kameragehäuse durch den Federdruck in dem Aufnahmerahmen gehalten und gegen vorgesehene Anschläge gedrückt wird. Insbesondere weist der Federbügel einen in Einschubrichtung (für das Kameragehäuse) federnd wirkenden Federabschnitt auf.

Die Erfindung weiterbildend ist vorgesehen, dass unterschiedlich geformte Verschlusselemente und insbesondere Federbügel mit dem Aufnahmerahmen koppelbar sind. So können unterschiedlich tief ausgeführte Kameragehäuse in der Rahmenaufnahme eingestellt und darin befestigt werden.

Eine Weiterbildung der Erfindung sieht vor, dass der Federbügel als Verschlusselementüber eine an die Form des Aufnahmerahmens angepasste Abschlussplatte auf das eingestellte Kameragehäuse einwirkt. Die Abschlussplatte bewirkt eine Vergleichmäßigung des Druckes des Federbügels auf das Kameragehäuse. Weiterhin ist es möglich, durch unterschiedlich tief ausgeführte Abschlussplatten eine Anpassung an unterschiedlich große Kameragehäuse vorzunehmen. Die Abschlussplatte kann zusätzlich mit dem Aufnahmerahmen zusammenwirkende Dichtelemente aufweisen, so dass die in der Aufnahmevorrichtung untergebrachte Einheit vor Witterungseinflüssen wie Staub oder Feuchtigkeit geschützt ist.

Eine weitere Ausführungsform sieht eine Klappe zum Abdeckung der Sichtöffnung der erfindungsgemäßen Aufnahme vor, wodurch die Aufnahme und das darin befindliche Gerät vor Steinschlägen geschützt werden.

Vorteilhafterweise ist die Klappe dabei je nach Einbauort gelenkig mit der Aufnahme selbst oder aber mit einem Einbauort am Fahrzeug selbst, vorzugsweise am Kühlergrill verbunden.

Des Weiteren erfolgt die Erläuterung von Ausführungsbeispielen der Erfindung an Hand der Zeichnungen.

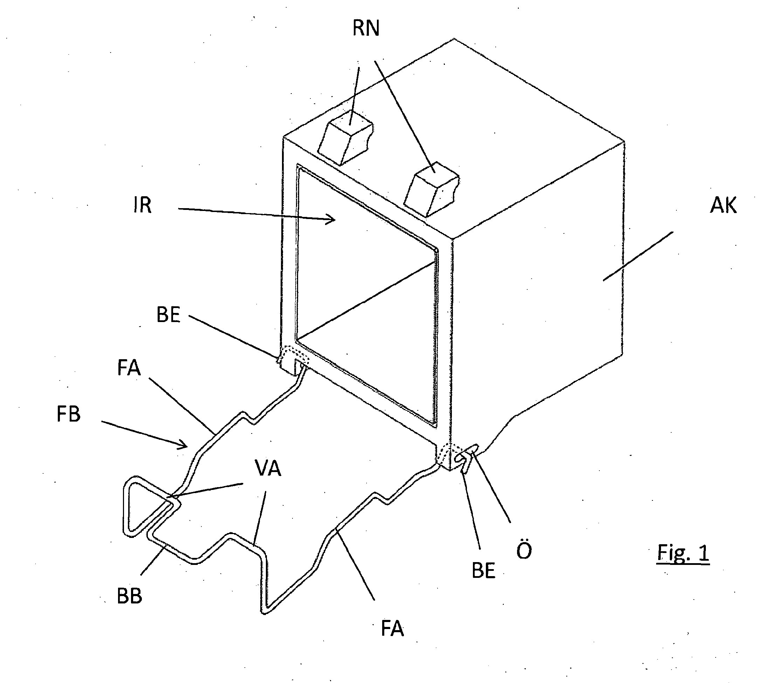

Figur 1 zeigt einen als Rahmen ausgeführten Aufnahmekörper AK, welcher im Wesentlich quaderförmig gestaltet ist und in dessen Innenraum IR ein in Figur 1 nicht dargestelltes Kameragehäuse KG einschiebbar ist. Der Aufnahmekörper AK weist an einer Unterseite sich gegenüberliegend zwei Öffnungen Ö auf, in welche die abgewinkelten Enden eines U-förmigen Federbügels FB eingehängt sind. Die Öffnungen Ö sind jeweils als Langloch geformt, so dass die Enden des Federbügels FB in einer Stellung leicht eingeführt und nach Verschwenken des Federbügels FB in die Schließstellung sicher gehalten werden. In Figur 1 ist die Offenstellung des durch den Federbügel FB gebildeten Verschlusselementes dargestellt.

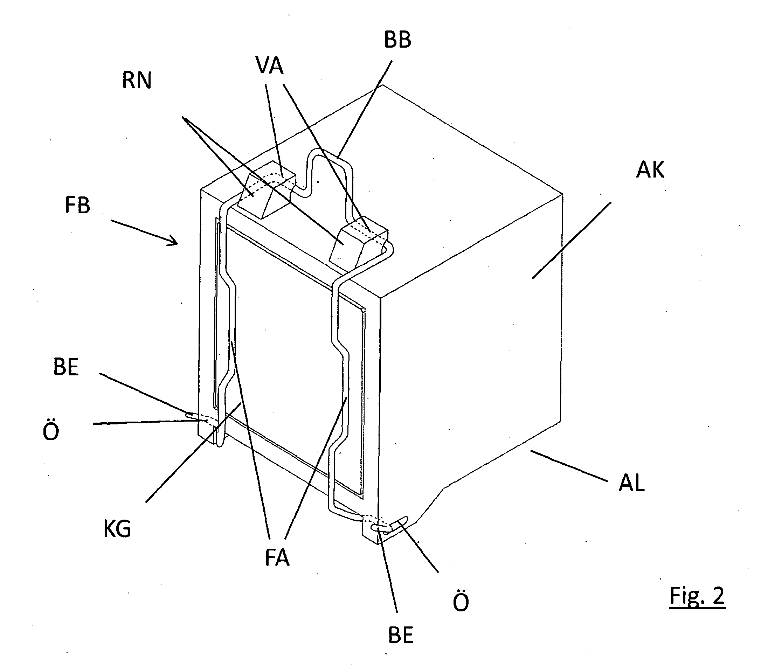

Nach Einschieben eines Kameragehäuses KG in den Aufnahmekörper AK wird der Federbügel FB in die Schließposition verschwenkt und das Verschlusselement verriegelt (Figur 2). Dazu weist der rahmenförmige Aufnahmekörper AK an der Oberseite zwei Rastnasen RN auf, mit denen zwei parallel zur Schwenkachse des Federbügels FB verlaufende Verriegelungsabschnitte VA zusammenwirken. Die in Schwenkrichtung des Federbügels FB nach vorne weisenden Seiten dieser Rastnasen RN sind schräg ausgeführt und erleichtern so das Schließen des Federbügels FB.

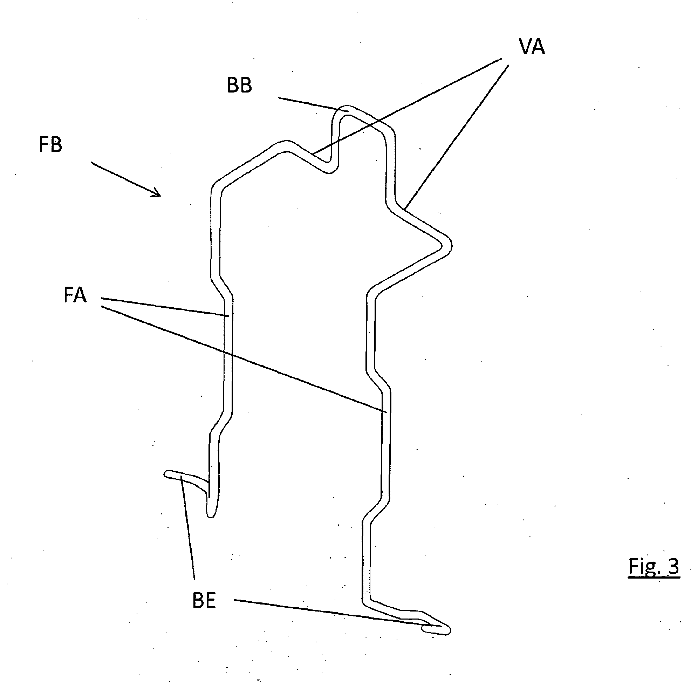

In Figur 3 ist der Federbügel FB als Bauteil separat dargestellt. Der als U-förmiges Teil gestaltete Federbügel FB weist an den beiden Schenkel je ein abgewinkeltes Ende BE auf, welches jeweils durch eine der Öffnungen Ö hindurchgesteckt wird. Zwischen den mit den Rastnasen RN des Aufnahmekörpers zusammenwirkenden Verriegelungsabschnitten VA ist der Federbügel FB zu einem Betätigungsbügel BB geformt, mittels dem das Schließelement federnd über die Rastnasen RN geschwenkt werden kann. Die mit der Rückseite eines in die Aufnahme AK eingestellten Kameragehäuses KG zusammenwirkenden Abschnitte der Schenkel des Federbügels FB sind als Federbereich FA ausgebildet, welche im geschlossenen Zustand des Federbügels eine in Einschubrichtung wirkende Kraft auf das Kameragehäuse KG ausüben.

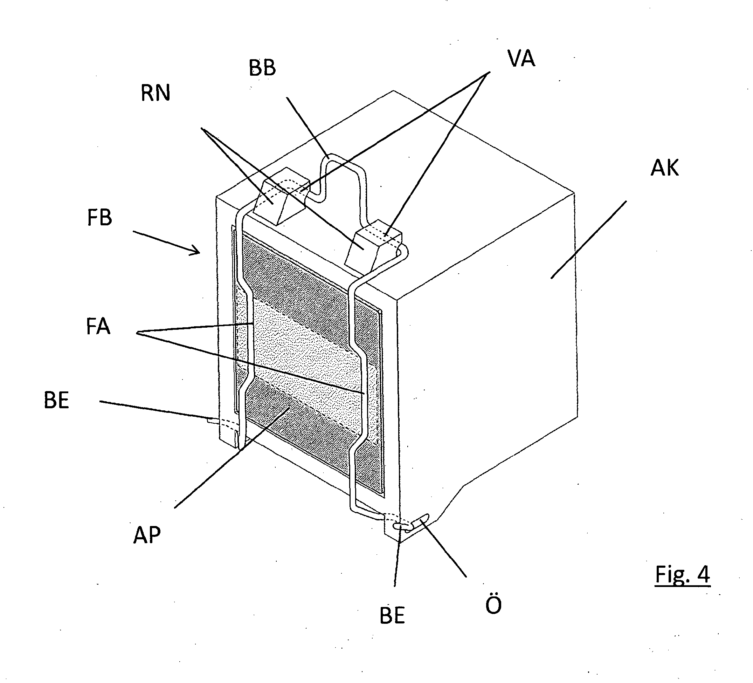

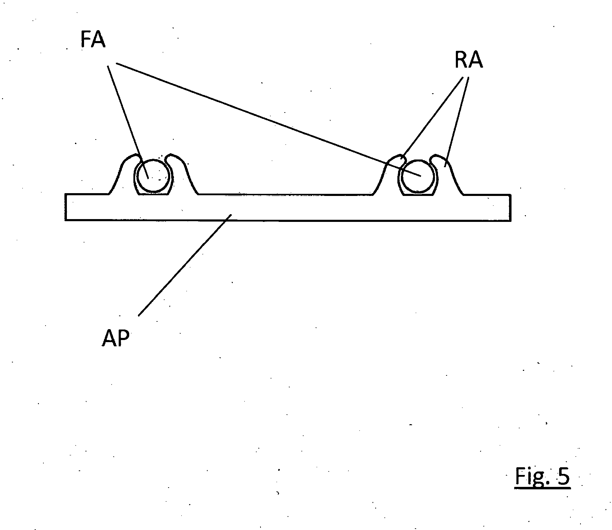

Bei der Ausführungsform nach Figur 4 wirkt der Federbügel FB bzw. dessen Federbereiche FA über eine Abschlussplatte AP auf das in den Aufnahmekörper AK eingestellte Kameragehäuse. Wie in Figur 5 wiedergegeben, kann die Abschlussplatte AP Rastaufnahmen RA aufweisen, in welche die Federbereiche FA des Federbügels eingerastet sind. Dadurch ist die Abschlussplatte direkt mit dem Federbügel FB als Verschlusselement verbunden, was den Handhabungsbedarf beim Einsetzen eines Kameragehäuses mit dem anschließenden Verriegeln des Federbügels erleichtert und zusätzliche Abstimmungsarbeit minimiert.

In einer weiteren vorteilhaften Ausführungsform wird der Federbügel nicht getrennt montiert, sondern gleich im Kunststoffspritzvorgang eingespritzt.

In keiner der Figuren 1 bis 5 wurde die Öffnung 10 der Aufnahme AK gezeigt, die im einfachsten Fall aus einem kreisrunden Loch für eine Linse besteht. Der Rahmen kann allerdings auch eine rechteckige Öffnung 10 aufweisen. Ja nach Einbauort ist eine solche Öffnung ausreichend.

Die Seite, die in den Figuren nicht sichtbar ist und die man als Sichtrichtung der Kamera oder des Sensors bezeichnen kann, kann mit eine angeformten und entsprechend ausgestatteten Designflächen und Lochaussparung hergestellt sein, jedoch kann auch ein extra Designseite mit Lochaussparung mit Gehäuse AK vereint werden.

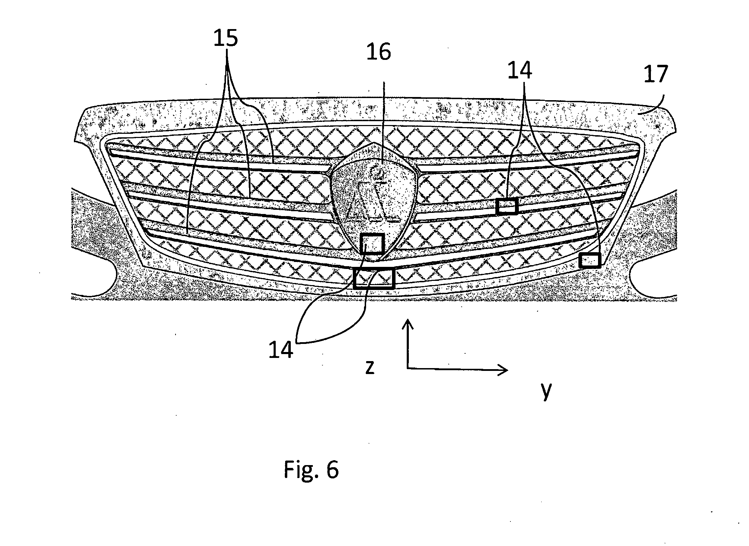

In Figur 6 ist schematisch ein Kühlergrill 12 dargestellt, der beispielhaft mehrere Einbaubereiche 14 umfasst. Die Einbaubereiche stellen im einfachsten Fall Öffnungen in der Struktur des Kühlergrills dar, hinter denen eine erfindungsgemäße Aufnahme AK angebracht ist. Die Einbaubereiche liegen bevorzugt im Bereich der Querträger 15, der Kühlerabdeckung 16 oder im Rahmen 17 des Kühlergrills oder oberhalb des Firmenzeichens bzw. unter der oberen angrenzenden Kontur des Stoßfängers oder der Motorhaube.

Da die Sensorik speziell bei einem Einbau im Bereich des Kühlergrills Steinschlägen ausgesetzt ist, ist eine Abdeckung der Öffnung 10 sinnvoll.

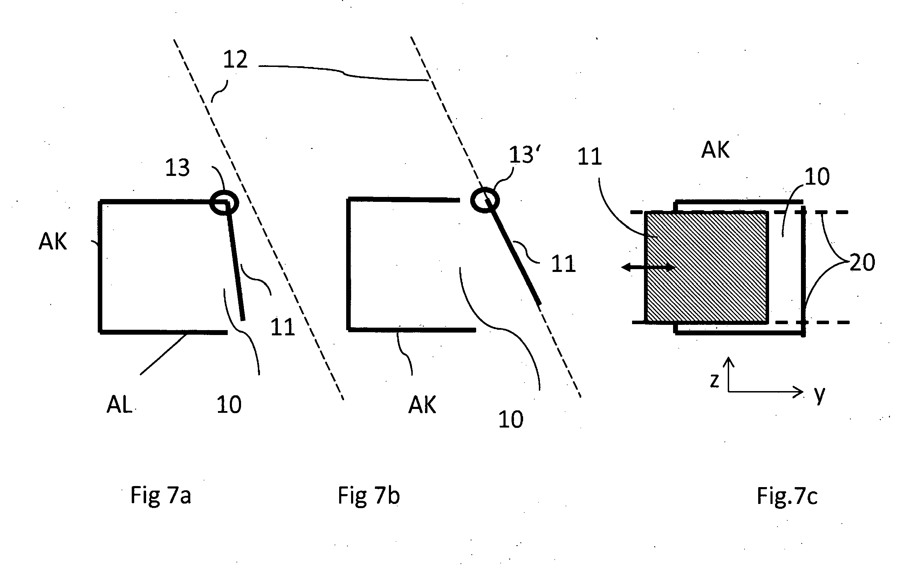

Die Figuren 7a und 7b zeigen eine Lösung für ein Verschließen der Öffnung 10 der Aufnahmen, die wie nicht weiter ausgeführt, aus der Aufnahmen AK der Figuren 1 bis 5 besteht. In einem Querschnitt ist die Aufnahme AK sowie der Verlauf des Kühlergrills 12 zu sehen. Eine Klappe 11 ist an einem Anlenkpunkt oder einer Anlenkachse 13 an der Aufnahmen AK angebunden und ist in diesem Beispiel im unteren Bereich leicht geöffnet. Die Klappe 11 kann aber muss die Öffnung 10 nicht vollständig schließen, so dass Spitzwasser auch ablaufen kann.

In einer vollständig zu schließenden Variante wird zusätzlich durch den Einbau von Dichtungen ein guter Schutz vor Spritzwasser und Vereisung erreicht, allerdings sollten dann die Aufnahme AK einen Ablauf für das während des Betriebs eindringenden Spritzwasser aufweisen. Das Gehäuse weist eine Ablaufloch AL am tiefsten Bereich auf, damit etwaige Wasseransammlungen entweichen können.

Die Klappe ist mechanisch oder elektrisch betätigbar, und um den Anlenkpunkt oder Anlenkachse 13 verschwenkbar. Bei der mechanischen Lösung ist es vorstellbar, dass sich die Optik einer Kamera in x-Richtung oder auch davon abweichen schräg nach unten herausschiebt und dadurch die Klappe aufdrückt. Das kann mit der Kameraoptik selbst oder unter Verwendung einer Nocke geschehen. Zum Verschluß der Klappe kann eine Feder wieder den geschlossenen Zustand wieder herstellen. Alternativ dazu kann die Klappe durch Zurückfahren der Kamera bzw eines Nocken mitgenommen.

In einer elektrischen Variante muss ein Stellmotor vorgesehen werden, um die Klappe 11 zu öffnen. In Figur 7a ist zu erkennen, dass die Aufnahme hinter dem Kühlergrill angeordnet ist und die Sensorik durch den Kühlergrills selbst oder durch eine Öffnung im Kühlergrill Daten aufnimmt.

In der Ausführung nach Figur 7b ist die Klappe 11 an einer Einbauposition des Kühlergrills angelenkt und die Aufnahme AK selbst ist lediglich baulich nahe aber getrennt dahinter angeordnet.

Als weitere alternative Ausführungsform wird die Klappe in einer oder zwei Verschiebeachsen 20 geführt und verschiebt sich wie in Figur 7c dargestellt entlang einer Achse senkrecht zur Fahrzeuglängsachse x, also entweder seitlich in y-Richtung oder in z-Richtung. Es sind auch alternative Einbaulagen denkbar, sodass die Ebene der Verschiebung in einer beliebigen anderen Ebene des X/Y/Z Achsensystems erfolgt.

Es sind aber auch alternative Achsenlagen für die Verschiebeachse 20 denkbar.

Im Beispiel ist die Klappe rechteckig, es sind aber auch runde oder gerundete oder ovale Formen für die Klappe 11 denkbar. Gerade bei einer runden Abdeckung ist ein Wegdrehen der Klappe um einen Anlenkpunkt in der Ebene y-z der Öffnung 10 der Aufnahme AK einfach umzusetzen.

### Bezugszeichenliste

- AK: Aufnahme, Kameraaufnahme, Aufnahmerahmen
- IR: Innenraum
- FB: Federbügel
- Ö: Öffnung (Langloch)
- RN: Rastnase
- VA: Verriegelungsabschnitt
- FA: Federabschnitt
- BE: abgewinkeltes Ende
- BB: Betätigungsbügel
- AP: Abschlussplatte
- RA: Rastaufnahme
- 10: Öffnung
- 11: Klappe
- 12: Kühlergrill
- 13: Anlenkpunkt oder Anlenkachse
- 14: Einbaubereiche
- 15: Querträger
- 16: Kühlerabdeckung
- 17: Rahmen
- 20: Verschiebeachse

## Patentansprüche

1. Aufnahmevorrichtung zur Aufnahme und Fixierung eines Gehäuses für eine Sensorik, und/oder eine Elektronik, eine Antriebseinheit oder eine Kamera in oder an einem Kraftfahrzeug, bestehend aus einem als Rahmen ausgebildeten, einen Innenraum (IR) umgebenden Aufnahme (AK) in welchen das Gehäuse (KG) einschiebbar ist, einem gelenkig mit Rahmen der Aufnahme (AK) verbundenen Federbügel (FB), welcher von einer den Innenraum (IR) der Aufnahme (AK) freigebenden Stellung in eine den Innenraum (IR) der Aufnahme (AK) schließenden Stellung verschwenkbar ist sowie einer dem Federbügel(FB) zugeordneten Fixierung, welche den Federbügel (FB) in der geschlossenen Position hält und dass der Federbügel als ein U- oder W-förmiger Drahtbügel ausgebildet ist, der über abgewinkelte Enden (BE) an seinen Schenkeln gelenkig in Öffnungen (Ö) der Aufnahme (AK) eingehängt ist, wobei das als Federbügel (FB) ausgebildete Verschlusselement mit abgewinkelten Enden (BE) in der Aufnahme (AK) eingespritzt ist.

2. Aufnahmevorrichtung nach Anspruch 1, **dadurch gekennzeichnet, dass** das Verschlusselement ist als ein Federbügel (FB) ausgebildet, der mit wenigstens einem abgewinkelten Ende gelenkig mit der Aufnahme (AK) verbunden ist.

3. Aufnahmevorrichtung nach Anspruch 1, **dadurch gekennzeichnet, dass** das Verschlusselement (FB) wirkt direkt auf eine Rückseite eines in die Aufnahme (AK) eingestelltes Gehäuse (KG).

4. Aufnahmevorrichtung nach Anspruch 1, **dadurch gekennzeichnet, dass** das Verschlusselement (FB) wirkt über eine zwischen Verschlusselement (FB) und der Rückseite des eingestelltes Gehäuse (KG) befindliche Abschlussplatte (AP) auf das Gehäuse (KG).

5. Aufnahmevorrichtung nach Anspruch 1, **dadurch gekennzeichnet, dass** die Abschlussplatte (AP) weist mit der Aufnahme (AK) zusammenwirkende Dichtelemente auf.

6. Aufnahmevorrichtung nach Anspruch 2 bis 4, **dadurch gekennzeichnet, dass** das als Federbügel (FB) ausgebildete Verschlusselement weist als Fixierung einen mit einer Rastnase (RN) an der Aufnahme (AK) zusammenwirkenden Verriegelungsabschnitt (VA) auf.

7. Aufnahmevorrichtung nach Anspruch 2 bis 4, **dadurch gekennzeichnet, dass** das als Federbügel (FB) ausgebildete Verschlusselement weist einen in Einschubrichtung des Gehäuses wirkenden Federabschnitt (FA) auf.

8. Aufnahmevorrichtung nach einem der vorherigen Ansprüche, **dadurch gekennzeichnet, dass** die Aufnahme (AK) in Blickrichtung der Sensorik eine verschließbare Öffnung (10) aufweist.

9. Aufnahmevorrichtung nach Anspruch 8, **dadurch gekennzeichnet, dass** die verschließbare Öffnung (10) mit einer verschwenkbaren und/oder verschiebbaren Klappe (11) versehen ist.

10. Aufnahmevorrichtung nach Anspruch 9, **dadurch gekennzeichnet, dass** die verschwenkbaren und/oder verschiebbaren Klappe (11) an einem Auslenkpunkt oder einer Auslenkebene (13) der Aufnahmen (AK) angebracht ist.

11. Aufnahmevorrichtung nach Anspruch 9, **dadurch gekennzeichnet, dass** die Aufnahme an einem Kühlergrill (12) angebracht ist und die verschwenkbaren und/oder verschiebbaren Klappe (11) an einem Auslenkpunkt oder einer Auslenkebene (13') des Kühlergrills angebracht ist.

12. Aufnahmevorrichtung nach Anspruch 1, **dadurch gekennzeichnet, dass** die Aufnahme (AK) eine Ablaufloch (AL) für Wasser aufweist.

## Claims

1. Holding device for carrying and fixing a housing for a sensor system and/or an electronic system, a drive unit or a camera in or on a motor vehicle, comprising a holder (AK) configured as a frame surrounding an interior (IR), into which the housing (KG) can be inserted, a spring clamp (FB) connected to the frame of the holder (AK) in an articulated manner, said spring clamp being pivotable from a position in which the interior (IR) of the holder (AK) is released into a position in which the interior (IR) of the holder (AK) is closed, and also a fixing assigned to the spring clamp (FB), which holds the spring clamp (FB) in the closed position, and in that the spring clamp is configured as a U-shaped or W-shaped wire bracket, which is suspended in an articulated manner in openings (Ö) in the holder (AK) via angled ends (BE) of its legs, the locking element configured as a spring clamp (FB) being injected with angled ends (BE) in the holder (AK).

2. Holding device according to Claim 1, **characterized in that** the locking element is configured as a spring clamp (FB) which is connected to the holder (AK) in an articulated manner by at least one angled end.

3. Holding device according to Claim 1, **characterized in that** the locking element (FB) acts directly on a rear side of a housing (KG) positioned in the holder (AK).

4. Holding device according to Claim 1, **characterized in that** the locking element (FB) acts on the housing (KG) via an end plate (AP) located between the locking element (FB) and the rear side of the positioned housing (KG).

5. Holding device according to Claim 1, **characterized in that** the end plate (AP) exhibits sealing elements acting together with the holder (AK).

6. Holding device according to Claims 2 to 4, **characterized in that** the locking element configured as a spring clamp (FB) exhibits a locking section (VA) working together with a latching lug (RN) on the holder (AK) as the fixing.

7. Holding device according to Claims 2 to 4, **characterized in that** the locking element configured as a spring clamp (FB) exhibits a spring section (FA) acting in the insertion direction of the housing.

8. Holding device according to one of the preceding claims, **characterized in that** the holder (AK) exhibits a closable opening (10) in the viewing direction of the sensor system.

9. Holding device according to Claim 8, **characterized in that** the closable opening (10) is provided with a pivotable and/or displaceable flap (11).

10. Holding device according to Claim 9, **characterized in that** the pivotable and/or displaceable flap (11) is attached to a pivot point or a pivot plane (13) of the holders (AK).

11. Holding device according to Claim 9, **characterized in that** the holder is attached to a radiator grill (12) and the pivotable and/or displaceable flap (11) is attached to a pivot point or a pivot plane (13') of the radiator grill.

12. Holding device according to Claim 1, **characterized in that** the holder (AK) exhibits a run-off hole (AL) for water.

## Revendications

1. Dispositif de réception servant à la réception et à la fixation d'un carter pour un système d'analyse sensorielle, et/ou un système électronique, une unité d'entraînement ou une caméra placés dans un véhicule automobile ou au niveau de celui-ci, composé d'un réceptacle (AK) prenant la forme d'un cadre, d'un espace intérieur (IR) environnant dans lequel le carter (KG) peut être inséré, d'un étrier de ressort (FB) relié de façon articulée au cadre du réceptacle (AK) pouvant être pivoté d'une position de libération de l'espace intérieur (IR) du réceptacle (AK) dans une position de fermeture de l'espace intérieur (IR) du réceptacle (AK) ainsi que d'une fixation associée à l'étrier de ressort (FB) maintenant l'étrier de ressort (FB) dans la position fermée et que l'étrier de ressort prend la forme d'un étrier en fil de fer en forme de U ou de W accroché de façon articulée dans les ouvertures (O) du réceptacle (AK) via les extrémités coudées (BE), au niveau de ses branches, l'élément de fermeture prenant une forme d'étrier de ressort (FB) étant injecté avec les extrémités coudées (BE) dans le réceptacle (AK).

2. Dispositif de réception selon la revendication 1, **caractérisé en ce que** l'élément de fermeture prend la forme d'un étrier de ressort (FB) relié de façon articulée au réceptacle (AK) à l'aide d'au moins une extrémité coudée.

3. Dispositif de réception selon la revendication 1, **caractérisé en ce que** l'élément de fermeture (FB) agit directement sur un côté arrière d'un carter (KG) placé dans le réceptacle (AK).

4. Dispositif de réception selon la revendication 1, **caractérisé en ce que** l'élément de fermeture (FB) agit sur le carter (KG) via une plaque terminale (AP) se trouvant entre l'élément de fermeture (FB) et le côté arrière du carter (KG) mis en place.

5. Dispositif de réception selon la revendication 1, **caractérisé en ce que** la plaque terminale (AP) comporte des éléments d'étanchéité entrant en interaction avec le réceptacle (AK).

6. Dispositif de réception selon la revendication 2 à 4, **caractérisé en ce que** l'élément de fermeture prenant la forme de l'étrier de ressort (FB) comporte comme fixation une section de verrouillage (VA) entrant en interaction avec un nez d'arrêt (RN) au niveau du réceptacle (AK).

7. Dispositif de réception selon la revendication 2 à 4, **caractérisé en ce que** l'élément de fermeture prenant la forme de l'étrier de ressort (FB) comporte une section de ressort (FA) agissant dans la direction d'insertion par poussée du carter.

8. Dispositif de réception selon l'une quelconque des revendications précédentes, **caractérisé en ce que** le réceptacle (AK) comporte dans la direction de visualisation du système d'analyse sensorielle une ouverture (10) pouvant être refermée.

9. Dispositif de réception selon la revendication 8, **caractérisé en ce que** l'ouverture (10) pouvant être refermée est pourvue d'un clapet (11) pouvant être pivoté et/ou coulissé.

10. Dispositif de réception selon la revendication 9, **caractérisé en ce que** le clapet (11) pouvant être pivoté et/ou coulissé est disposé au niveau d'un point d'alignement ou d'un plan d'alignement (13) du réceptacle (AK).

11. Dispositif de réception selon la revendication 9, **caractérisé en ce que** le réceptacle est disposé au niveau d'une grille de refroidisseur (12) et que le clapet (11) pouvant être pivoté et/ou pouvant être coulissé est placé au niveau d'un point d'alignement ou d'un plan d'alignement (13') de la grille de refroidisseur.

12. Dispositif de réception selon la revendication 1, **caractérisé en ce que** le réceptacle (AK) comporte un trou d'évacuation (AL) prévu pour l'eau.
